(19) Europäisches Patentamt
European Patent Office
Office européen des brevets

(11) **EP 4 660 931 A1**

(12) **EUROPEAN PATENT APPLICATION**
published in accordance with Art. 153(4) EPC

(43) Date of publication:
**10.12.2025   Bulletin 2025/50**

(21) Application number: **24831335.5**

(22) Date of filing: **07.03.2024**

(51) International Patent Classification (IPC):
*G06Q 50/10* (2012.01)

(52) Cooperative Patent Classification (CPC):
**G06Q 50/10**

(86) International application number:
**PCT/JP2024/008863**

(87) International publication number:
**WO 2025/004458 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2023   JP 2023106370**

(71) Applicant: **JFE Steel Corporation
Tokyo 100-0011 (JP)**

(72) Inventor: **HOSHINO, Takeru
Tokyo 100-0011 (JP)**

(74) Representative: **Scott, Stephen John
YUJA IP LAW
East Coast House
25 Skeldergate
York YO1 6DH (GB)**

(54) **PROFIT DISTRIBUTION DEVICE, PROGRAM, AND RECORDING MEDIUM**

(57)     A profit distribution device (10) is a profit distribution device for distributing profit obtained through carbon credit trading of a carbon credit eligible product to a supplier, an intermediary, and a purchaser of the carbon credit eligible product via an information terminal, and includes a memory (12) configured to store supply information and sales information on the carbon credit eligible product and store the profit, and a calculator (13) configured to calculate a contribution rate of each of the supplier, the intermediary, and the purchaser to the profit based on the supply information and the sales information, and distribute the profit to the supplier, the intermediary, and the purchaser in accordance with the contribution rate.

*FIG. 1*

**Description**

TECHNICAL FIELD

The present disclosure relates to a profit distribution device, a program, and a recording medium. The present disclosure particularly relates to a profit distribution device, a program, and a recording medium for sharing profits from carbon credit trading.

BACKGROUND

In recent years, carbon neutrality, which aims to balance greenhouse gas emissions and absorption, has been proposed as an approach to combat global warming. In order to achieve carbon neutrality, carbon credit trading mechanisms that will enable greenhouse gas emission reductions to be bought and sold between entities (countries, regions, organizations, corporations, individuals, and so forth) are beginning to be established.

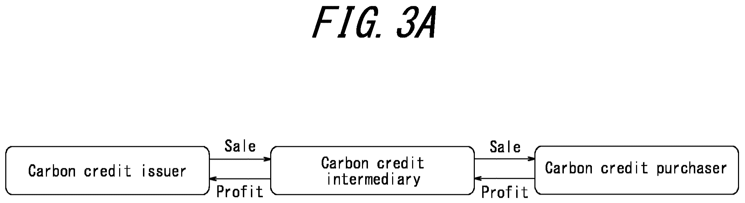

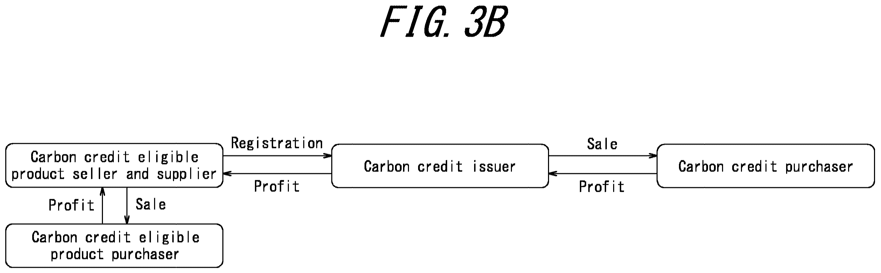

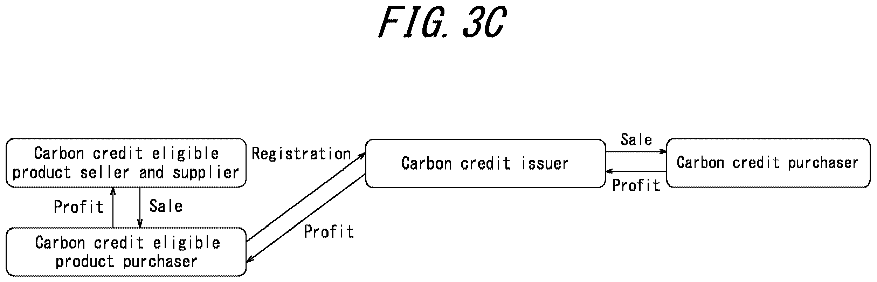

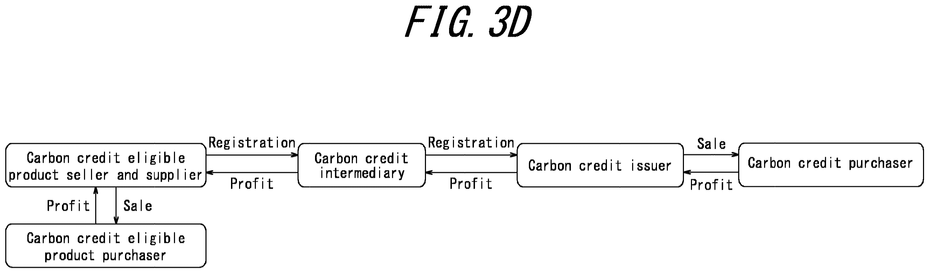

For example, Patent Literature (PTL) 1 discloses a system, for supporting trading of carbon dioxide emission rights, configured by a plurality of trading terminals and a trading site. PTL 2, for example, describes a mechanism in which a carbon credit issuer transacts with a purchaser of a carbon credit eligible product through a carbon credit intermediary or the like (see FIG. 3A). For example, a mechanism is known in which a supplier of a carbon credit eligible product transacts with a carbon credit purchaser through a carbon credit issuer (see FIG. 3B). In another example of a known mechanism, a purchaser of a carbon credit eligible product transacts with a carbon credit issuer (see FIG. 3C). As another example, a mechanism is known in which a supplier of a carbon credit eligible product transacts with a carbon credit issuer through a carbon credit intermediary (see FIG. 3D).

CITATION LIST

Patent Literature

PTL 1: JP 4620858 B2
PTL 2: JP 2023-26906 A

SUMMARY

(Technical Problem)

Here, in order to carry out carbon credit trading, a sales record of carbon credit eligible products is required. The trading mechanism illustrated in FIGS. 3A to 3D requires a supplier of carbon credit eligible products to sell the carbon credit eligible products. In many cases, suppliers of carbon credit eligible products supply carbon credit eligible products but do not sell them. Therefore, the transaction mechanism illustrated in FIGS. 3A to 3D does not match the system of normal commercial transactions via, for example, a retail store. In addition, because the mechanism is designed to provide profits only to suppliers of carbon credit eligible products or only to purchasers of carbon credit eligible products, it does not take into account the distribution of profits in the case of transactions via retail stores and the like.

The present disclosure was conceived in light of these circumstances and aims to provide a profit distribution device, a program, and a recording medium that can revitalize carbon credit trading.

(Solution to Problem)

(1) A profit distribution device according to an embodiment of the present disclosure is
a profit distribution device for distributing profit obtained through carbon credit trading of a carbon credit eligible product to a supplier, an intermediary, and a purchaser of the carbon credit eligible product via an information terminal, the profit distribution device comprising:

    a memory configured to store supply information and sales information on the carbon credit eligible product and store the profit; and
    a calculator configured to calculate a contribution rate of each of the supplier, the intermediary, and the purchaser to the profit based on the supply information and the sales information, and distribute the profit to the supplier, the intermediary, and the purchaser in accordance with the contribution rate.

(2) As an embodiment of the present disclosure, in (1),

the memory is further configured to store processing information, and
the calculator is configured to calculate the contribution rate of each of the supplier, the intermediary, and the purchaser to the profit based on the supply information, the sales information, and the processing information.

(3) As an embodiment of the present disclosure, in (1) or (2),
the calculator is configured to designate a profit of the supplier as $P_{supplier}$, a profit of the intermediary as $P_{maker}$, a profit of the purchaser as $P_{user}$, the profit as $P_{carboncredit}$, a raw material profit as $P_{material}$, a product profit as $P_{product}$, a raw material cost as $c_{material}$, a production cost as $c_{product}$, a set lower limit profit of the supplier as $L_{supplier}$, a set lower limit profit of the intermediary as $L_{maker}$, and a set lower limit profit of the purchaser as $L_{user}$, and calculate $r_{supplier}$, $r_{maker}$, and $r_{user}$ so that all expressions below are satisfied, where $r_{supplier}$ is the contribution rate of the supplier, $r_{maker}$ is the contribution rate of the intermediary, and $r_{user}$ is the contribution rate of the purchaser,

[Math. 1]

$$P_{supplier} = p_{material} - c_{material} + p_{carboncredit} \times r_{supplier} \geq L_{supplier}$$

$$P_{maker} = p_{product} - c_{product} - p_{material} + p_{carboncredit} \times r_{maker} \geq L_{maker}$$

$$P_{user} = -p_{product} + p_{carboncredit} \times r_{user} \geq L_{user}$$

$$r_{supplier} + r_{maker} + r_{user} = 1.$$

(4) As an embodiment of the present disclosure, in any one of (1) to (3),
the supplier and the purchaser are each one or more in number, and the intermediary is zero or more in number.
(5) As an embodiment of the present disclosure, in any one of (1) to (4),
the profit obtained through the carbon credit trading of the carbon credit eligible product is a profit obtained via a carbon credit intermediary.
(6) As an embodiment of the present disclosure, in any one of (1) to (5),
the calculator is configured to distribute the profit to the supplier, the intermediary, and the purchaser through a collaborator not directly involved in transaction of the carbon credit eligible product.
(7) A program according to an embodiment of the present disclosure is
configured to cause a profit distribution device, for distributing profit obtained through carbon credit trading of a carbon credit eligible product to a supplier, an intermediary, and a purchaser of the carbon credit eligible product via an information terminal, to execute processing comprising:

storing supply information and sales information on the carbon credit eligible product;
storing the profit;
calculating a contribution rate of each of the supplier, the intermediary, and the purchaser to the profit based on the supply information and the sales information; and
distributing the profit to the supplier, the intermediary, and the purchaser in accordance with the contribution rate.

(8) A recording medium according to an embodiment of the present disclosure is
a recording medium that has the program of (7) recorded thereon and is readable by the profit distribution device.

(Advantageous Effect)

According to the present disclosure, a profit distribution device, a program, and a recording medium that can revitalize carbon credit trading can be provided.

BRIEF DESCRIPTION OF THE DRAWINGS

In the accompanying drawings:

FIG. 1 is a diagram illustrating a configuration example of a profit distribution system including a profit distribution device according to an embodiment of the present disclosure;

FIG. 2A is a diagram illustrating a carbon credit trading mechanism implemented by the profit distribution system of FIG. 1;

FIG. 2B is a diagram illustrating the carbon credit trading mechanism implemented by the profit distribution system of FIG. 1;

FIG. 2C is a diagram illustrating the carbon credit trading mechanism implemented by the profit distribution system of FIG. 1;

FIG. 2D is a diagram illustrating the carbon credit trading mechanism implemented by the profit distribution system of FIG. 1;

FIG. 3A is a diagram illustrating a conventional carbon credit trading mechanism;

FIG. 3B is a diagram illustrating a conventional carbon credit trading mechanism;

FIG. 3C is a diagram illustrating a conventional carbon credit trading mechanism;

FIG. 3D is a diagram illustrating a conventional carbon credit trading mechanism; and

FIG. 4 is a diagram illustrating a screen of a calculation result that a calculator causes an information terminal to display.

DETAILED DESCRIPTION

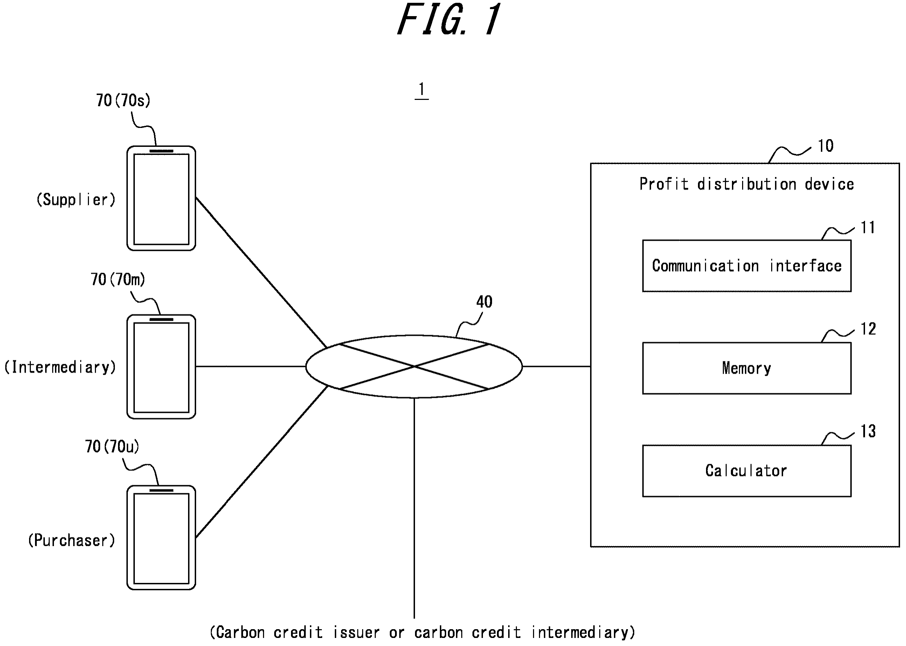

Hereinafter, a profit distribution device 10 (see FIG. 1) and a program according to an embodiment of the present disclosure will be described with reference to the drawings.

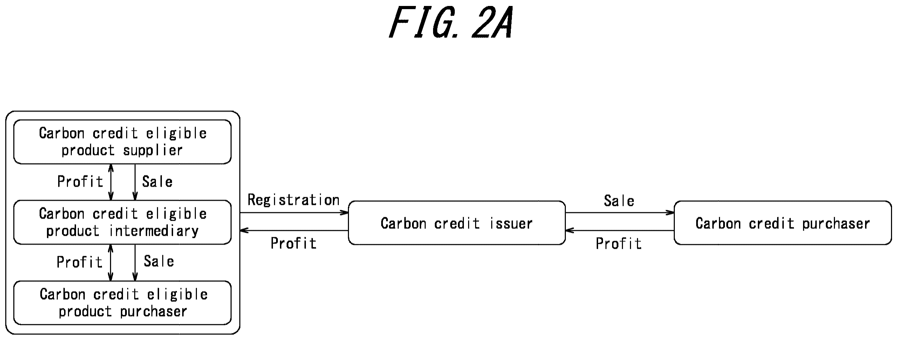

FIG. 1 is a diagram illustrating a configuration example of a profit distribution system 1 including a profit distribution device 10 according to the present embodiment. FIG. 2A is a diagram illustrating a carbon credit trading mechanism implemented by the profit distribution system 1 of FIG. 1. The profit distribution device 10 distributes a profit obtained through carbon credit trading of a carbon credit eligible product to a supplier, an intermediary, and a purchaser of the carbon credit eligible product via an information terminal 70. In the following, the supplier of the carbon credit eligible product will be referred to simply as the "supplier". An intermediary for the carbon credit eligible products will be referred to simply as the "intermediary". Also, a purchaser of the carbon credit eligible product will be referred to simply as the "purchaser". Carbon credit eligible products are products or services that contribute to achieving carbon neutrality, such as products that reduce greenhouse gas emissions during the production process. Specific examples of carbon credit eligible products include afforestation, reforestation, soil carbon storage, biochar, land-based storage of biomass, and BECCS (Bioenergy with Carbon Capture and Storage). The carbon credit eligible product may also be Direct Air Carbon Capture and Storage (DACCS). Carbon credit eligible products can also be carbonation materials, accelerated weathering, blue carbon, ocean alkalization, energy conservation, renewable energy, industrial processes, agriculture, waste, automobiles and housing, and the like. As illustrated in FIG. 2A, when a carbon credit eligible product is registered (certified) by a carbon credit issuer and carbon credits are sold, a "profit obtained through carbon credit trading of a carbon credit eligible product" is generated. The profit may be money (an amount of money) or a monetary value that can be exchanged for money or can be used like money to purchase goods or the like. Carbon credits act as a permit for emitting greenhouse gases. In other words, carbon credit purchasers can emit greenhouse gases equivalent to the amount of carbon credits they have purchased. Here, in the drawings and the like, the purchaser and intermediary of carbon credits are designated as the "carbon credit purchaser" and "carbon credit intermediary", respectively, so as to distinguish them from the purchaser and intermediary of carbon credit eligible products.

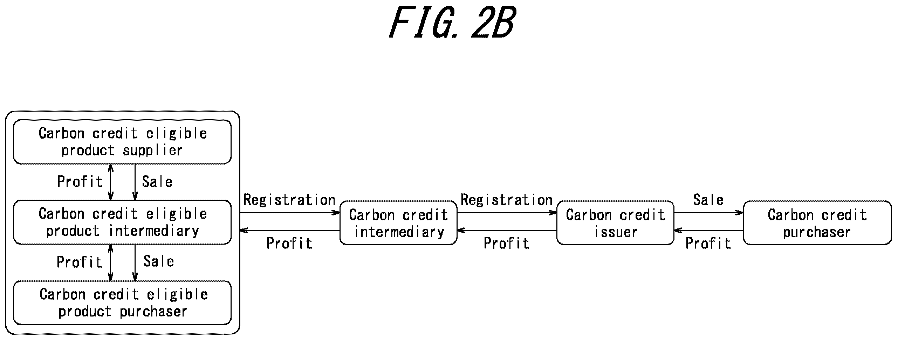

Here, the registration of carbon credit eligible products may be performed not only by the carbon credit issuer but also by the carbon credit intermediary. FIG. 2B is a diagram illustrating the carbon credit trading mechanism implemented by the profit distribution system 1 of FIG. 1. As illustrated in FIG. 2B, carbon credit eligible products may be registered (certified) by a carbon credit intermediary, and carbon credits may be sold via a carbon credit issuer. In this carbon credit trading mechanism, the profit obtained through carbon credit trading of a carbon credit eligible product is obtained via a carbon credit intermediary.

As illustrated in FIG. 1, the profit distribution device 10 includes a communication interface 11, a memory 12, and a calculator 13. The profit distribution device 10 may have a hardware configuration such as a computer. The components of the profit distribution device 10 will be described in detail later. The profit distribution device 10 need not be a single device and may be configured by a plurality of devices that are placed in a plurality of locations and are capable of transmitting and receiving data to and from each other via a network 40. For example, the profit distribution device 10 may have a hardware configuration including one computer, or a plurality of computers connected via the network 40. In the case of configuration by a plurality of computers, the memory 12 may be a shared memory that can be accessed by each computer.

The profit distribution device 10 may constitute a profit distribution system 1 together with the information terminal 70 connected via the network 40. The network 40 is, for example, the Internet. Furthermore, part of the network 40 may be configured to include, for example, a local area network (LAN). In the present embodiment, the profit distribution system 1 is accessible via the network 40 to a device that manages carbon credit transactions of carbon credit issuers. The profit distribution device 10 acquires the "profit obtained through carbon credit trading of the carbon credit eligible product" via the network 40. Here, the profit distribution system 1 may further include a device for managing carbon credit trading.

The information terminal 70 is, for example, a computer separate from the profit distribution device 10. In the present embodiment, the information terminal 70 is used by each of the supplier, the intermediary, and the purchaser in trading (selling) the carbon credit eligible product. As illustrated in FIG. 1, when it is necessary to distinguish between the information terminals 70 of the supplier, the intermediary, and the purchaser, they may be designated as the information terminal 70s, information terminal 70m, and information terminal 70u. The information terminal 70 may be a general-purpose mobile terminal such as a smartphone or a tablet terminal. The information terminal 70 may be equipped with a display (display unit) so that the supplier, the intermediary, and the purchaser can check the distributed profits. Furthermore, the information terminal 70 may have the same functions as the communication interface 11, memory 12 and calculator 13 of the profit distribution device 10, that is, a communication function, a memory function, and a calculation function. The information terminal 70 may include an input interface to which the supplier, the intermediary, and the purchaser can input data. In this case, the information terminal 70 may include a touch panel display in which an input interface and a display are integrated.

As illustrated in FIG. 2A or 2B, the supplier sells a carbon credit eligible product to an intermediary. The supplier may be, for example, a producer of the carbon credit eligible product. The intermediary may be, for example, a processor or seller of the carbon credit eligible product. A specific example of a seller is a retail store. The intermediary sells the carbon credit eligible product to the purchaser. The purchaser is, for example, a user of the carbon credit eligible product or a processed product thereof. Here, the suppliers and the purchasers are each one or more in number (one or more entities). There may be a plurality of suppliers and a plurality of purchasers. Also, the intermediaries are zero or more in number (zero entities, or one or more entities). There may be no intermediary or there may be a plurality of intermediaries.

The components of the profit distribution device 10 will now be described in detail. The communication interface 11 includes one or more communication modules that connect to the network 40. The communication interface 11 may include a communication module compatible with mobile communication standards such as 4G (4th Generation) and 5G (5th Generation). The communication interface 11 may also include a communication module compatible with, for example, a wireless or wired LAN standard.

The memory 12 includes one or more memories. The memories can be any memory, including but not limited to a semiconductor memory, a magnetic memory, or an optical memory. The memory 12 is, for example, built into the profit distribution device 10, but may also be configured to be accessed externally by the profit distribution device 10 via any interface.

The memory 12 stores various data used in various calculations performed by the calculator 13. The memory 12 may also store the results and intermediate data of various calculations performed by the calculator 13.

In the present embodiment, the memory 12 stores supply information and sales information on carbon credit eligible products acquired via the communication interface 11. The memory 12 also stores the profit ($P_{carboncredit}$) obtained through the carbon credit trading of the carbon credit eligible product as acquired via the communication interface 11. Furthermore, when processing information on the carbon credit eligible product is acquired via the communication interface 11, the memory 12 further stores the processing information.

The supply information is obtained from the information terminal 70s of the supplier and includes the raw material cost ($c_{material}$) of the carbon credit eligible product. The sales information includes raw material profit ($P_{material}$) and product profit ($P_{product}$). The raw material profit is obtained from the information terminal 70s of the supplier or the information terminal 70m of the intermediary. The product profit is obtained from the information terminal 70m of the intermediary or the information terminal 70u of the purchaser. The processing information is obtained from the information terminal 70m of the intermediary and includes the production cost ($c_{product}$) for processing the carbon credit eligible product. The processing information is acquired in a case in which the intermediary is a processor. For example, in a case in which the intermediary is a seller who does not process the carbon credit eligible product, the processing information is not acquired.

In the present embodiment, the memory 12 stores a lower limit of profit (set lower limit profit) set by the supplier, intermediary, and purchaser before distribution of the profit obtained through carbon credit trading of a carbon credit eligible product. The set lower limit profit ($L_{supplier}$) of the supplier is input in advance to the information terminal 70s by the supplier and can be obtained from the information terminal 70s. The set lower limit profit ($L_{maker}$) of the intermediary is input in advance to the information terminal 70m by the intermediary and can be obtained from the information terminal 70m. The set lower limit profit ($L_{user}$) of the purchaser is input in advance by the purchaser into the information terminal 70u and can be obtained from the information terminal 70u. The set lower limit profit may be set to a positive value, or it may be set to zero or a negative value when no profit is required. For example, suppliers and intermediaries may set positive values considering only sales margins. For example, a supplier may set a negative value in consideration of disposal fees in the event that the carbon credit eligible product cannot be sold. In addition, the minimum profit limit set by a purchaser is generally a negative value, but for example, an environmentally conscious purchaser, i.e., a purchaser who wants to contribute to achieving carbon neutrality rather than profit, may set a negative value that takes into account the price difference from products that are not eligible for carbon credits.

The calculator 13 may be configured to include one or more processors. The processor can, for example, be a general-purpose processor or a dedicated processor specialized for particular processing, but the processor is not limited to these examples and may be any processor. The calculator 13 may have a function as a controller that controls the overall operation of the profit distribution device 10. For example, the calculator 13 may obtain the aforementioned supply information, sales information, processing information, and the like from the information terminal 70 and store the information in the memory 12.

The calculator 13 calculates the contribution rates of the supplier, the intermediary, and the purchaser to the profit based on the supply information, the sales information, and the processing information. In the present embodiment, the calculator 13 calculates $r_{supplier}$, which is the contribution rate of the supplier, $r_{maker}$, which is the contribution rate of the intermediary, and $r_{user}$, which is the contribution rate of the purchaser, so that all of the following expressions are satisfied.

[Math. 2]

$$P_{supplier} = p_{material} - c_{material} + p_{carboncredit} \times r_{supplier} \geq L_{supplier}$$

$$P_{maker} = p_{product} - c_{product} - p_{material} + p_{carboncredit} \times r_{maker} \geq L_{maker}$$

$$P_{user} = -p_{product} + p_{carboncredit} \times r_{user} \geq L_{user}$$

$$r_{supplier} + r_{maker} + r_{user} = 1.$$

Here, $P_{supplier}$ is the profit of the supplier. $P_{maker}$ is the profit of the intermediary. $P_{user}$ is the profit of the purchaser. The last expression indicates that the sum of the contribution of the supplier, the contribution of the intermediary, and the contribution of the purchaser is one. As described above, the profit obtained through carbon credit trading is $P_{carboncredit}$, the raw material profit is $P_{material}$, and the product profit is $P_{product}$. The raw material cost is $c_{material}$, and the production cost is $c_{product}$. Furthermore, the set lower limit profit for the supplier is $L_{supplier}$, the set lower limit profit for the intermediary is $L_{maker}$, and the set lower limit profit for the purchaser is $L_{user}$. By calculating the contribution rates of each of the supplier, intermediary, and purchaser so that all of the expressions are satisfied, the calculator 13 can appropriately determine the contribution rates while satisfying the set lower limit profits of each of the supplier, intermediary, and purchaser. Here, the contribution rates can be set to a value that does not satisfy the set lower limit profit in terms of calculation. However, the usual approach is to ensure economic rationality in transactions, and it is preferable that the contribution rates be set so as to satisfy the set lower limit profit of each of the supplier, intermediary, and purchaser. In addition, the profit is also distributed, in accordance with the contribution rate, to an intermediary (processor or seller of carbon credit eligible products) who was not taken into consideration in the conventional technology. In this way, the profit is distributed to all entities involved in the sale of a carbon credit eligible product, thereby increasing the motivation of all entities to engage in carbon credit trading, and thus revitalizing carbon credit trading.

As noted above, the intermediary may be a seller who does not perform processing. In this case, processing information does not need to be obtained. Also, the production cost ($c_{product}$) for processing the carbon credit eligible product included in the processing information may be set to zero. In other words, the calculator 13 calculates the contribution rate of each of the supplier, intermediary, and purchaser to the profit based on at least the supply information and sales information, and distributes the profit to the supplier, intermediary, and purchaser according to the contribution rate. The calculator 13 may output the contribution rates of the supplier, the intermediary, and purchaser, or the distributed profits obtained by multiplying the profit by the contribution rates, to the respective information terminals 70.

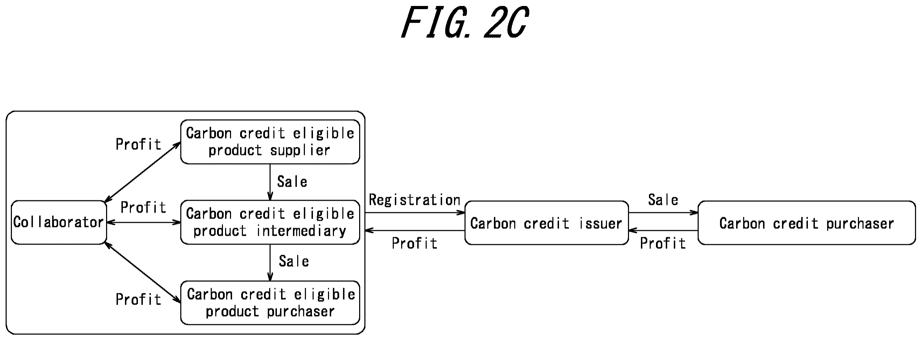

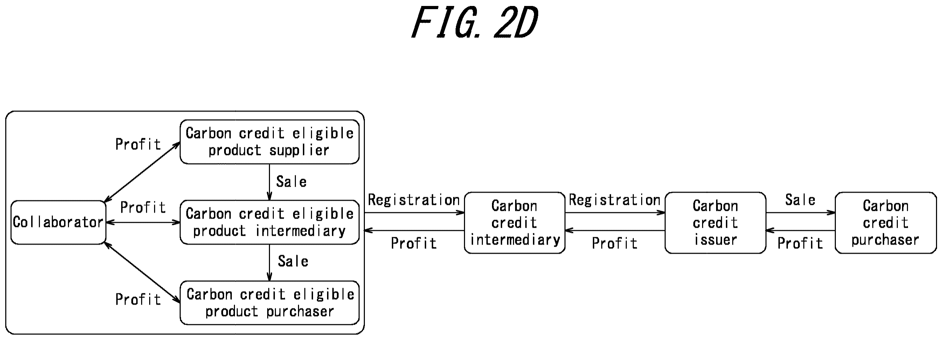

Here, the supplier, intermediary, and purchaser may be able to sell the carbon credit eligible product with the cooperation of a collaborator who is not directly involved in the transaction. Collaborators include, for example, trading companies, agents, and other parties that act as intermediaries in sales through contracts, but do not fall under the category of processors or sellers (i.e., do not directly process or sell). In the case of such a sales format, the calculator 13 may distribute the profit to the supplier, intermediary, and purchaser through the collaborator who is not directly involved in the transaction of the carbon credit eligible product. In other words, the manner in which the calculator 13 distributes the profit to the supplier, intermediary, and purchaser includes not only the aforementioned manner in which the calculator 13 distributes the profit directly, but also a manner in which the calculator 13 distributes the profit to the supplier, intermediary, and purchaser via a collaborator. FIGS. 2C and 2D illustrate a carbon credit trading mechanism in which a credit is distributed to a supplier, intermediary, and purchaser via a collaborator. For example, the calculator 13 may calculate contribution rates and distribute the profit according to the contribution rates so that the profit is distributed from the supplier via the collaborator to the intermediary and the purchaser. For example, the calculator 13 may calculate contribution rates and distribute the profit according to the contribution rates so that the profit is distributed from the intermediary via the collaborator to the supplier and the purchaser. For example, the calculator 13 may calculate contribution rates and distribute the profit according to the contribution rates so that the profit is distributed from the purchaser via the collaborator

## EP 4 660 931 A1

to the supplier and the intermediary. For example, the calculator 13 may calculate contribution rates and distribute the profit according to the contribution rates so that the profit is distributed from the supplier and the intermediary via the collaborator to the purchaser. Here, in the case in which profit distribution is performed via a collaborator, a portion of the profit may also be distributed to the collaborator as a fee.

Here, the profit distribution device 10 may have the following software configuration. One or more programs used to control the operation of the profit distribution device 10 are stored in the memory 12 or other storage medium that is readable by the profit distribution device 10. The program stored in the memory 12 or other storage medium may, when loaded by the processor of the calculator 13, cause the processor to function so as to execute the profit distribution process described above. That is, the program may cause the profit distribution device 10 to execute processing to store the supply information and sales information on the carbon credit eligible product and to store the profit. Then, the program may cause the profit distribution device 10 to execute processing to calculate the contribution rate of each of the supplier, the intermediary, and the purchaser to the profit based on the supply information and the sales information, and to distribute the profit to the supplier, the intermediary, and the purchaser according to the contribution rate.

As described above, the profit distribution device 10 and the program according to the present embodiment can revitalize carbon credit trading through the aforementioned configuration.

While embodiments of the present disclosure have been described with reference to the drawings and examples, it should be noted that various modifications and amendments may easily be implemented by those skilled in the art based on the present disclosure. Accordingly, such modifications and amendments are included within the scope of the present disclosure. For example, functions or the like included in each component, each step, or the like can be rearranged without logical inconsistency, and a plurality of components, steps, or the like can be combined into one or divided. Embodiments according to the present disclosure can also be realized as a storage medium (non-transitory computer readable recording medium) having recorded thereon a program to be executed by a processor included in an apparatus. Such embodiments are also to be understood as included in the scope of the present disclosure.

In the above embodiment, the profit distribution device 10 has been described as being realized by a computer or the like different from the information terminal 70. However, the profit distribution device 10 may be realized by one of the information terminals 70. In other words, the aforementioned processes executed by the communication interface 11, memory 12, and calculator 13 of the profit distribution device 10 may be realized by the communication function, memory function, and calculation function of the information terminal 70. As an example, the information terminal 70s of the supplier may execute the profit distribution process. As an example, the information terminal 70m of the intermediary may execute the profit distribution process. As another example, the information terminal 70u of the purchaser may execute the profit distribution process. In this case, the profit distribution system 1 may be configured by only a plurality of information terminals 70.

In the above embodiment, the calculator 13 of the profit distribution device 10 has been described as executing all the calculations of the profit distribution. However, this calculation may be shared with the information terminal 70. For example, the calculator 13 may calculate the profit of the supplier ($P_{supplier}$), the profit of the intermediary ($P_{maker}$), and the profit of the purchaser ($P_{user}$), and output these to the information terminal 70s, the information terminal 70m, and the information terminal 70u, respectively. Then, each of the information terminal 70s, the information terminal 70m, and the information terminal 70u may compare the set lower limit profit ($L_{supplier}$), the set lower limit profit of the intermediary ($L_{maker}$), and the set lower limit profit of the purchaser ($L_{user}$) and output the comparison results to the profit distribution device 10. In this case, the processing load of the profit distribution device 10 can be reduced.

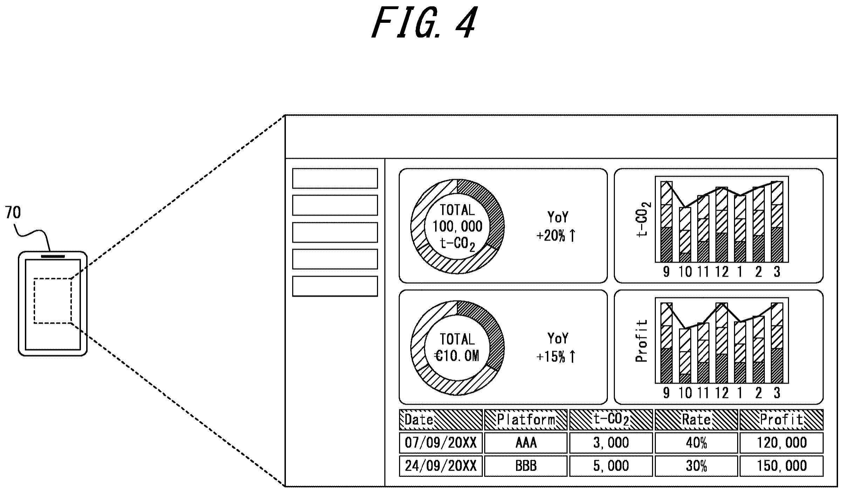

In addition, the calculator 13 may perform calculations for profit distribution, store the calculation results in the memory 12, and based on the stored information, cause the information terminal 70, via the communication interface 11 and the network 40, to display the profit distribution history (such as changes over time). The calculator 13 may also calculate not only the profit distribution history but also, for example, the sales record of carbon credit eligible products converted into tons of carbon dioxide ($t-CO_2$) and output these as calculation results together with the profit distribution history. FIG. 4 illustrates an example of a screen of the calculation result that the calculator 13 causes the information terminal 70 to display. In the example of FIG. 4, the profit distribution history, the sales record history, and the like are illustrated in chronological order. Also illustrated is a year-over-year comparison (YoY). By display of such information on the information terminal 70, suppliers, intermediaries and purchasers of carbon credit eligible products will become more aware of their contribution to carbon neutrality, which further revitalizes carbon credit trading.

REFERENCE SIGNS LIST

| 1 | Profit distribution system |
| 10 | Profit distribution device |
| 11 | Communication interface |

7

| 12 | Memory |
| 13 | Calculator |
| 40 | Network |
| 70, 70s, 70m, 70u | Information terminal |

**Claims**

1. A profit distribution device for distributing profit obtained through carbon credit trading of a carbon credit eligible product to a supplier, an intermediary, and a purchaser of the carbon credit eligible product via an information terminal, the profit distribution device comprising:

   a memory configured to store supply information and sales information on the carbon credit eligible product and store the profit; and
   a calculator configured to calculate a contribution rate of each of the supplier, the intermediary, and the purchaser to the profit based on the supply information and the sales information, and distribute the profit to the supplier, the intermediary, and the purchaser in accordance with the contribution rate.

2. The profit distribution device according to claim 1, wherein the memory is further configured to store processing information, and
   the calculator is configured to calculate the contribution rate of each of the supplier, the intermediary, and the purchaser to the profit based on the supply information, the sales information, and the processing information.

3. The profit distribution device according to claim 1 or 2, wherein the calculator is configured to designate a profit of the supplier as $P_{supplier}$, a profit of the intermediary as $P_{maker}$, a profit of the purchaser as $P_{user}$, the profit as $P_{carboncredit}$, a raw material profit as $P_{material}$, a product profit as $P_{product}$, a raw material cost as $c_{material}$, a production cost as $c_{product}$, a set lower limit profit of the supplier as $L_{supplier}$, a set lower limit profit of the intermediary as $L_{maker}$, and a set lower limit profit of the purchaser as $L_{user}$, and calculate $r_{supplier}$, $r_{maker}$, and $r_{user}$ so that all expressions below are satisfied, where $r_{supplier}$ is the contribution rate of the supplier, $r_{maker}$ is the contribution rate of the intermediary, and $r_{user}$ is the contribution rate of the purchaser,

   [Math. 1]

   $$P_{supplier} = p_{material} - c_{material} + p_{carboncredit} \times r_{supplier} \geq L_{supplier}$$

   $$P_{maker} = p_{product} - c_{product} - p_{material} + p_{carboncredit} \times r_{maker} \geq L_{maker}$$

   $$P_{user} = -p_{product} + p_{carboncredit} \times r_{user} \geq L_{user}$$

   $$r_{supplier} + r_{maker} + r_{user} = 1.$$

4. The profit distribution device according to any one of claims 1 to 3, wherein the supplier and the purchaser are each one or more in number, and the intermediary is zero or more in number.

5. The profit distribution device according to any one of claims 1 to 4, wherein the profit obtained through the carbon credit trading of the carbon credit eligible product is a profit obtained via a carbon credit intermediary.

6. The profit distribution device according to any one of claims 1 to 5, wherein the calculator is configured to distribute the profit to the supplier, the intermediary, and the purchaser through a collaborator not directly involved in transaction of the carbon credit eligible product.

7. A program configured to cause a profit distribution device, for distributing profit obtained through carbon credit trading of a carbon credit eligible product to a supplier, an intermediary, and a purchaser of the carbon credit eligible product via an information terminal, to execute processing comprising:

   storing supply information and sales information on the carbon credit eligible product;
   storing the profit;
   calculating a contribution rate of each of the supplier, the intermediary, and the purchaser to the profit based on the supply information and the sales information; and
   distributing the profit to the supplier, the intermediary, and the purchaser in accordance with the contribution rate.

8. A recording medium that has the program according to claim 7 recorded thereon and is readable by the profit distribution device.

# FIG. 1

1

Profit distribution device 10

Communication interface 11

Memory 12

Calculator 13

40

70 (70s) (Supplier)

70 (70m) (Intermediary)

70 (70u) (Purchaser)

(Carbon credit issuer or carbon credit intermediary)

# FIG. 2A

```
┌──────────────────────────────────┐
│  ┌────────────────────────────┐  │
│  │   Carbon credit eligible   │  │
│  │     product supplier       │  │
│  └────────────────────────────┘  │
│      Profit ↑  │ Sale            │                Registration
│  ┌────────────────────────────┐  │ ──────────────────────────►  ┌──────────────────────────┐         Sale        ┌──────────────────────────────┐
│  │   Carbon credit eligible   │  │                              │  Carbon credit issuer    │ ──────────────────► │   Carbon credit purchaser    │
│  │   product intermediary     │  │ ◄──────────────────────────  │                          │ ◄────────────────── │                              │
│  └────────────────────────────┘  │          Profit              └──────────────────────────┘       Profit        └──────────────────────────────┘
│      Profit ↑  │ Sale            │
│  ┌────────────────────────────┐  │
│  │   Carbon credit eligible   │  │
│  │     product purchaser      │  │
│  └────────────────────────────┘  │
└──────────────────────────────────┘
```

# FIG. 2B

Carbon credit eligible product supplier

Sale

Profit

Carbon credit eligible product intermediary

Sale

Profit

Carbon credit eligible product purchaser

Registration

Profit

Carbon credit intermediary

Registration

Profit

Carbon credit issuer

Sale

Profit

Carbon credit purchaser

# FIG. 2C

# FIG. 2D

# FIG. 3A

```
                          Sale                              Sale
┌──────────────────────┐  ──────> ┌──────────────────┐  ──────> ┌──────────────────────────┐
│ Carbon credit issuer │          │  Carbon credit   │          │ Carbon credit purchaser  │
│                      │  <────── │   intermediary   │  <────── │                          │
└──────────────────────┘  Profit  └──────────────────┘  Profit  └──────────────────────────┘
```

# FIG. 3B

```
┌─────────────────────────┐  Registration  ┌─────────────────────┐      Sale      ┌──────────────────────────┐
│  Carbon credit eligible │ ─────────────► │                     │ ─────────────► │                          │
│ product seller and supplier│            │ Carbon credit issuer│               │ Carbon credit purchaser  │
│                         │ ◄───────────── │                     │ ◄───────────── │                          │
└─────────────────────────┘     Profit     └─────────────────────┘     Profit     └──────────────────────────┘
       ▲        │
  Profit│       │Sale
       │        ▼
┌─────────────────────────┐
│  Carbon credit eligible │
│    product purchaser    │
└─────────────────────────┘
```

# FIG. 3C

Carbon credit eligible product seller and supplier — Registration → Carbon credit issuer — Sale → Carbon credit purchaser

Carbon credit issuer ← Profit — Carbon credit purchaser

Carbon credit eligible product seller and supplier — Profit / Sale — Carbon credit eligible product purchaser

Carbon credit eligible product purchaser ← Profit — Carbon credit issuer

# FIG. 3D

```
┌─────────────────────┐  Registration  ┌───────────────┐  Registration  ┌─────────────────────┐   Sale   ┌─────────────────────────┐
│ Carbon credit eligible │ ──────────→  │ Carbon credit │ ──────────→  │ Carbon credit issuer │ ──────→  │ Carbon credit purchaser │
│product seller and supplier│ ←────────  │ intermediary  │ ←────────  │                     │ ←──────  │                         │
└─────────────────────┘    Profit     └───────────────┘    Profit     └─────────────────────┘  Profit  └─────────────────────────┘
     ↑        │
  Profit │    │ Sale
     │        ↓
┌─────────────────────┐
│ Carbon credit eligible │
│  product purchaser     │
└─────────────────────┘
```

# FIG. 4

| Date | Platform | t-$CO_2$ | Rate | Profit |
|---|---|---|---|---|
| 07/09/20XX | AAA | 3,000 | 40% | 120,000 |
| 24/09/20XX | BBB | 5,000 | 30% | 150,000 |

## INTERNATIONAL SEARCH REPORT

| International application No. |
|---|
| **PCT/JP2024/008863** |

**A. CLASSIFICATION OF SUBJECT MATTER**

*G06Q 50/10*(2012.01)i
FI: G06Q50/10

According to International Patent Classification (IPC) or to both national classification and IPC

**B. FIELDS SEARCHED**

Minimum documentation searched (classification system followed by classification symbols)

G06Q50/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| P, X | KR 10-2552352 B1 (WRIGHTBROTHERS CO., LTD.) 06 July 2023 (2023-07-06) abstract, paragraphs [0014], [0026]-[0027], [0052], [0066]-[0080], [0086]-[0104] | 1, 4-8 |
| A | JP 2011-233079 A (MITSUBISHI HEAVY INDUSTRIES, LTD.) 17 November 2011 (2011-11-17) entire text, all drawings | 1-8 |
| A | KR 10-2011-0028108 A (PANGAEA21 CO., LTD.) 17 March 2011 (2011-03-17) entire text, all drawings | 1-8 |
| A | US 2010/0145833 A1 (INTERNATIONAL BUSINESS MACHINES CORPORATION) 10 June 2010 (2010-06-10) entire text, all drawings | 1-8 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **12 April 2024** | **23 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/008863**

| Patent document cited in search report | | | Publication date (day/month/year) | Patent family member(s) | Publication date (day/month/year) |
|---|---|---|---|---|---|
| KR | 10-2552352 | B1 | 06 July 2023 | (Family: none) | |
| JP | 2011-233079 | A | 17 November 2011 | (Family: none) | |
| KR | 10-2011-0028108 | A | 17 March 2011 | (Family: none) | |
| US | 2010/0145833 | A1 | 10 June 2010 | (Family: none) | |

Form PCT/ISA/210 (patent family annex) (July 2022)

EP 4 660 931 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4620858 B

- JP 2023026906 A